# EUROPÄISCHE PATENTSCHRIFT

(11) **EP 2 908 099 B1**
(45) Veröffentlichungstag und Bekanntmachung des Hinweises auf die Patenterteilung: **12.04.2017**
(21) Anmeldenummer: 14155096.2
(22) Anmeldetag: 13.02.2014
(51) Int. Cl.: G01D 5/34, G01D 5/347

(54) **Vorrichtung zur Messung des Drehwinkels zweier relativ zueinander rotierender Objekte**
Device for measuring the angle of rotation of two objects rotating relative to each other
Dispositif de mesure de l'angle de rotation de deux objets tournant l'un par rapport à l'autre

(43) Veröffentlichungstag der Anmeldung: 19.08.2015
(60) Teilanmeldung: 15198675.9
(73) Patentinhaber: SICK STEGMANN GmbH, 78166 Donaueschingen (DE); Fraunhofer-Gesellschaft zur Förderung der angewandten Forschung e.V., 80686 München (DE)
(72) Erfinder: Mutschler, Reinhold, 78056 Villingen-Schwenningen (DE); Hopp, David, 78166 Donaueschingen (DE); Verwaal, Nanko, 91074 Herzogenaurach (DE); Junger, Stephan, 91088 Bubenreuth (DE); Neubauer, Harald, 91052 Erlangen (DE)
(74) Vertreter: Ludewigt, Christoph

(56) Entgegenhaltungen:
- EP-A1- 2 600 113

## Beschreibung

Die Erfindung betrifft eine Vorrichtung zur Messung des Drehwinkels zweier relativ zueinander rotierender Objekte gemäß dem Oberbegriff des Patentanspruchs 1.

Für viele Anwendungen ist es von grundlegender Bedeutung, den Drehwinkel eines rotierenden Objektes zu messen. Im Allgemeinen wird dabei der Drehwinkel des rotierenden Objektes relativ zu einem feststehenden Objekt gemessen. Beispielsweise kann es sich bei dem rotierenden Objekt um die rotierende Welle eines Motors relativ zu einem feststehenden Maschinenteil handeln. Ein auf dem rotierenden Objekt vorgesehener Maßstab kann dabei sowohl inkrementell als auch absolut sein. Dabei ist es wünschenswert, eine möglichst toleranzunempfindliche Messung der relativen Drehbewegung durchführen zu können, welche jedoch eine hohe Genauigkeit aufweist. Im Idealfall erfolgt die Messung berührungslos, um mechanischen Verschleiß zu vermeiden.

Bekannt ist ein Messprinzip unter Ausnutzung der optischen Polarisation von Licht. Durch Drehung eines beleuchteten Polarisators, welcher sich beispielsweise mit dem rotierenden Objekt mit dreht, wird die Polarisation des Lichtes eines Lichtsenders beeinflusst, was mittels eines Empfängers detektierbar ist. Vor dem Empfänger ist ein vorgelagertes polarisierendes Element vorgesehen, wobei der Empfänger und das vorgelagerte polarisierende Element zusammen ein Analysatorelement bilden. Bei geeigneter Wahl der geometrischen Anordnung des Lichtsenders, des Polarisators und des aus dem Empfänger und dem vorgelagerten polarisierenden Element bestehenden Analysatorelements kann die relative Intensitätsmodulation im Analysatorelement ein Maß für den Drehwinkel sein. Bei Drehung des linear polarisierenden Polarisators gegen das vor dem Empfänger angeordnete linear polarisierende Element, das auch als Polarisationsfilter bezeichnet werden kann, ergibt sich eine sinusquadratförmige Intensitätsmodulation über eine Drehung um 360°. Um eine Drehwinkelberechnung vornehmen zu können, sind daher vorteilhafterweise zwei gegeneinander gedrehte Polarisationsfilter vorhanden.

Die EP 2 522 960 A1 offenbart eine Vorrichtung zur Messung des Drehwinkels zweier relativ zueinander rotierender Objekte, mit einem dem einen Objekt zugeordneten Sender, mit einem Linearpolarisator, wobei sich der Sender und der Polarisator in Abhängigkeit vom Drehwinkel relativ zueinander drehen, und mit einem Empfänger, der die durch das vorgelagerte polarisierende Element durchtretende Lichtintensität misst, um ein drehwinkelabhängiges Signal zu erzeugen. Dabei weist der Empfänger wenigstens zwei Empfangselemente auf, vor welchen jeweils ein Polarisationsfilter angeordnet ist, wobei wenigstens zwei der Polarisationsebenen der Polarisationsfilter gegeneinander verdreht angeordnet sind.

Insbesondere wenn der Empfänger als auf einem Siliziumchip integrierter Sensor, wie beispielsweise in der EP 2 275 790 A2 beschrieben, ausgebildet ist, sind die Empfangselemente unmittelbar benachbart und vergleichsweise klein ausgebildet, so dass es durch die von der Wellenlänge abhängige Eindringtiefe des Lichtes in das Silizium im Grenzgebiet der benachbarten Empfangselemente zu einem Übersprechen der Empfangssignale der benachbarten Empfangselemente kommen kann. Dieses Übersprechen führt zu einer gegenseitigen Beeinflussung von Amplitude und Phase der detektierten Signale und damit in der Vorrichtung zur Messung des Drehwinkels zweier relativ zueinander rotierender Objekte zu einem Messfehler in der Winkelmessung.

EP 2 600 113 A1 offenbart eine Vorrichtung mit den Merkmalen des Oberbegriffs des Anspruchs 1.

Die Aufgabe der Erfindung besteht darin, eine Vorrichtung zur Messung des Drehwinkels zweier relativ zueinander rotierender Objekte derart weiterzubilden, dass in dem Empfänger Messfehler, insbesondere Messfehler durch Übersprechen zwischen verschiedenen Empfangselementen, bei der Winkelmessung verringert, insbesondere vermieden, werden.

Die Aufgabe der Erfindung wird gelöst durch eine Vorrichtung mit den Merkmalen des Anspruchs 1.

Dies bedeutet, dass zwei Analysatorelemente mit der gleichen Polarisationsebene von z.B. 0° nicht unmittelbar nebeneinander, insbesondere in Kontakt miteinander, angeordnet sein dürfen, sondern mindestens ein Analysatorelement mit einer anderen Polarisationsebene von z.B. 90° zwischen den beiden Analysatorelementen mit der gleichen Polarisationsebene von 0° angeordnet sein muss.

Gemäß einem weiteren bevorzugten Ausführungsbeispiel bestehen die Gruppen von Analysatorelementen aus Paarungen von 0° und 90°, 22,5° und 112,5°, 45° und 135°, und 67,5° und 157,5°.

Die Erfindung sieht vor, dass in einer Zeile zwei Gruppen von Analysatorelementen angeordnet sind, deren Polarisationsebenen um 90° gegeneinander verdreht sind, wobei benachbarte Analysatorelemente unterschiedliche Polarisationsebenen aufweisen. Analysatorelementen mit Polarisationsebenen, welche einen Winkelversatz von 90° aufweisen, können sich gegenseitig in ihrem Übersprechverhalten kompensieren. Dadurch wird lediglich die Amplitude jedoch nicht die Phase der Signale des eigentlichen Analysatorelements beeinflusst, sofern das Analysatorelement in seinem linearen Bereich arbeitet. Dadurch, dass in einer Zeile genau zwei Typen von Analysatorelementen angeordnet sind, deren Polarisationsebenen um 90° gegeneinander verdreht sind, wobei benachbarte Analysatorelemente unterschiedliche Polarisationsebenen aufweisen, führt das Übersprechen nicht zu einem Phasenfehler. Eine derartige Zeile mit Analysatorelementen bzw. Empfangselementen ist daher in sich invariant gegenüber Übersprechen. Aufgrund der versetzten Anordnung tritt ein Übersprechen auf ein Analysatorelement bzw. Empfangselement einer benachbarten Zeile immer sowohl durch ein Analysatorelement bzw. Empfangselement des einen Typs und ein Analysatorelement bzw. Empfangselement des anderen Typs auf, wobei sich diese Einflüsse aufgrund der um 90° gegeneinander verdrehten Polarisationsebenen in ihrem Einfluss auf die Phase gegenseitig aufheben. Eine derartige Anordnung ermöglicht somit in besonders effektiver Weise eine Verringerung beziehungsweise ein Vermeiden eines Einflusses eines Übersprechens auf das Messsignal.

Vorteilhafterweise sind die die Gruppen von Analysatorelementen in wenigstens zwei, vorzugsweise vier oder acht, angrenzenden Zeilen voneinander verschieden.

Besonders bevorzugt ist der Empfänger als integrierter Sensor ausgebildet, bei welchem insbesondere ein optoelektronischer Sensor und eine Polarisationsfilterstruktur gemeinsam auf einem Halbleitersubstrat angeordnet sind. Insbesondere bei derartigen Empfängern ist eine Verringerung oder vollständige Vermeidung des Einflusses eines Übersprechens wünschenswert.

Eine besonders bevorzugte Ausführungsform der Erfindung sieht vor, dass zur Bestimmung des drehwinkelabhängigen Signals lediglich die Signale der Analysatorelemente herangezogen werden, welche vollständig von weiteren Analysatorelementen umgeben sind. Da bei Analysatorelementen am Rand aufgrund der unsymmetrischen Anordnung von benachbarten Analysatorelementen nicht ausgeschlossen werden kann, dass ein Übersprechen erfolgt, und eine optimierte Verringerung des Einflusses des Übersprechens lediglich bei den innenliegenden Analysatorelementen erreicht wird, kann die Auswertung weiter verbessert und der Messfehler weiter verringert werden, wenn lediglich die Analysatorelemente ausgewertet werden, welche vollständig von weiteren Analysatorelementen umgeben sind. Die am Rand angeordneten Analysatorelemente erzeugen das erforderliche Übersprechen auf die innen angrenzenden Analysatorelemente, um die Symmetrie für die ausgewerteten Analysatorelemente zu wahren, werden vorteilhafterweise jedoch nicht selber ausgewertet, da bei ihnen der Einfluss des Übersprechens in der Regel nicht in optimaler Weise verringert ist.

Vorteilhafte Ausgestaltungen und Weiterbildungen sowie weitere Vorteile der Erfindung sind den Unteransprüchen, der nachfolgenden Beschreibung und den Zeichnungen zu entnehmen. Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung einer Vorrichtung zur Messung des Drehwinkels zweier relativ zueinander rotierender Objekte,
- Fig. 2: eine schematische Darstellung eines Ausführungsbeispiels des Empfängers mit Polarisationsfilterstruktur der Vorrichtung gemäß Figur 1,
- Fig. 3: eine schematische Darstellung eines weiteren Ausführungsbeispiels des Empfängers mit Polarisationsfilterstruktur der Vorrichtung gemäß Figur 1, das nicht Teil der Erfindung ist,
- Fig. 4: eine schematische Darstellung eines weiteren Ausführungsbeispiels des Empfängers mit Polarisationsfilterstruktur der Vorrichtung gemäß Figur 1, das nicht Teil der Erfindung ist, und
- Fig. 5: eine schematische Darstellung eines weiteren Ausführungsbeispiels des Empfängers mit Polarisationsfilterstruktur gemäß Figur 1, das nicht Teil der Erfindung ist.

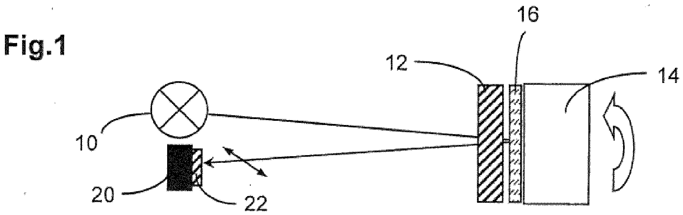

Figur 1 zeigt eine Vorrichtung zur Messung des Drehwinkels zweier relativ zueinander rotierender Objekte. Dabei ist vorliegend lediglich ein Objekt rotierend ausgebildet, nämlich eine Welle 14 beispielsweise eines Motors, wobei der Drehwinkel der Welle 14 in Bezug zu einem feststehenden Teil, beispielsweise dem Motorgehäuse oder einem feststehenden Maschinenteil, ermittelt werden soll. Die Vorrichtung weist eine Lichtquelle 10 auf, welche feststehend angeordnet ist und beispielsweise dem feststehenden Teil zugeordnet sein kann. Die Lichtquelle 10 kann beispielsweise unpolarisiertes oder teilpolarisiertes Licht aussenden und insbesondere als LED ausgebildet sein.

Der rotierenden Welle 14 ist ein sich mit der Welle 14 drehender Reflektor 16 zugeordnet, vor welchem ein ebenfalls mit der Welle 14 drehender Polarisator 12, welcher beispielsweise als Polarisationsfilter ausgebildet ist, angeordnet ist. Hierbei kann alternativ der Polarisator 12 als "Wire Grid" Polarisator oder als plasmonischer Polarisator ausgebildet sein, so dass er polarisiertes Licht reflektieren kann. Der Reflektor 16 kann ferner entweder als diffus reflektierendes oder absorbierendes Element ausgebildet sein, um die beim ersten Durchtritt des Lichtes durch den Polarisator 12 erhaltene Polarisation zu zerstören.

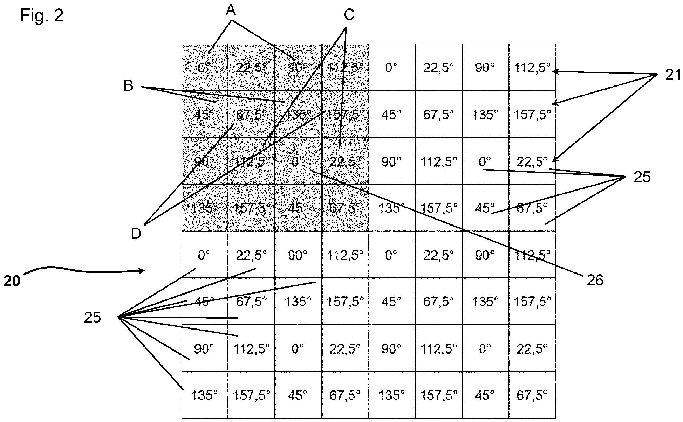

Weiterhin ist ein Empfänger 20 vorgesehen, vor welchem eine Polarisationsfilterstruktur 22 angeordnet ist. Der Empfänger 20 weist zumindest ein zweidimensionales, aus Zeilen 21, 21', 21", 21'" bestehendes Array auf, auf dem Empfangselemente mit jeweils vorgeordneten Polarisationsfilterelementen der Polarisationsfilterstruktur 22 angeordnet sind. Die Empfangselemente mit den jeweils vorgeordneten Polarisationsfilterelementen bilden jeweilige Analysatorelemente 25, 25', 25", 25"', 26 zum Detektieren der Winkelsignale. Der Empfänger 20 ist ebenfalls feststehend angeordnet und kann beispielsweise dem feststehenden Teil zugeordnet sein. Verschiedene Ausführungsformen des Empfängers 20 mit der Polarisationsfilterstruktur 22 bzw. der Anordnung der Analysatorelementen 25, 25', 25", 25"', 26 werden anhand der Figuren 2 bis 5 erläutert.

Abhängig vom Drehwinkel der rotierenden Welle 14 ändert sich die Intensität des Lichtes, welches in den Analysatorelementen 25, 25', 25", 25"', 26 detektiert wird.
Figur 2 zeigt in schematischer Darstellung ein erstes Ausführungsbeispiel eines Empfängers 20 mit einer erfindungsgemäßen Anordnung der Analysatorelemente 25. Der Empfänger 20 weist ein zweidimensionales, aus mehreren Zeilen 21 bestehendes Array auf, auf dem eine Mehrzahl von Analysatorelementen 25 angeordnet sind.

Die Analysatorelemente 25 weisen unterschiedliche Polarisationsrichtungen bzw. -winkel auf, die 0°, 22,5°, 45°, 67,5°, 90°, 112,5°, 135° und 157,5° betragen. Hierbei sind die Analysatorelemente 25 derart auf dem Array angeordnet, dass sie in vier Gruppen A, B, C, D von Analysatorelementen 25 zugeordnet werden können, die jeweils aus einem Paar von Analysatorelementen 25 bestehen.

Die Paare von Analysatorelementen 25 zeichnen sich durch einen Winkelversatz von 90° zueinander aus, so dass sich bei der erfindungsgemäßen Anordnung vier Paarungen von Analysatorelementen mit den Polarisationsrichtungen 0° und 90°, 22,5° und 112,5°, 45° und 135°, und 67,5° und 157,5° ergeben.

Die Gruppen A, B, C, D von Analysatorelementen 25 sind in einer definierten Anordnung zueinander in den Zeilen des Arrays vorgesehen, so dass ein innenliegendes Analysatorelement 26 durch drei Gruppen B, C, D von Analysatorelementen 25 sowohl in horizontaler Richtung als auch in vertikaler Richtung des Arrays umgeben ist.

Durch diese Anordnung wird ein Übersprechen der einzelnen Analysatorelemente 25 innerhalb der Gruppe B, C, D kompensiert, so dass ein Einfluss des Übersprechens auf das zentral innenliegende Analysatorelement 26 reduzier- bzw. vermeidbar ist. Ferner ist mittels dieser Anordnung eine Kompensation des Übersprechens für acht Polarisationsrichtungen realisierbar.

Ferner sind die jeweiligen Analysatorelemente 25 mit gleicher Polarisationsebene, wie z.B. 0°, derart in den Zeilen des Arrays angeordnet, dass sie nicht unmittelbar nebeneinander, insbesondere in direktem Kontakt zueinander, angeordnet sind, sondern durch drei Analysatorelemente mit einer anderen Polarisationsebene in waagerechter, nämlich 22,5°, 90° und 112,5°, und senkrechter, nämlich 45°, 90° und 135°, Richtung und durch ein Analysatorelement mit der Polarisationsebene 67,5° in diagonaler Richtung beabstandet.

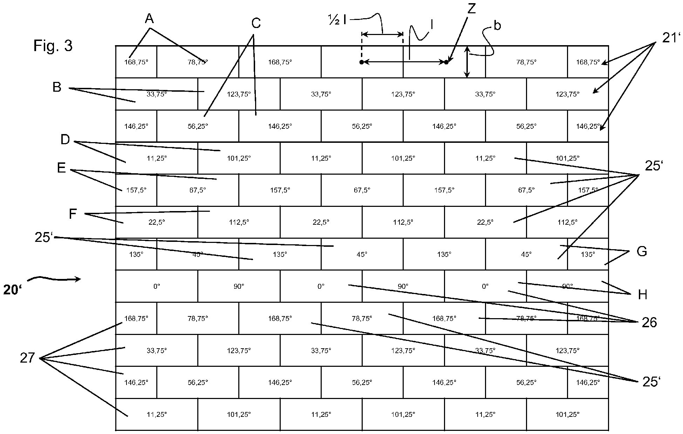

In der Figur 3 ist in schematischer Darstellung ein weiteres Ausführungsbeispiel einer Anordnung, die nicht Teil der Erfindung ist, eines Empfängers 20' mit einer Polarisationsfilterstruktur gezeigt. Hierbei weist der Empfänger 20' ebenfalls mehrere Zeilen 21' auf, in welchen jeweils mehrere Analysatorelemente 25' angeordnet sind.

Abgesehen von einigen am Rand angeordneten Analysatorelementen 27 weisen die Analysatorelemente 25' bevorzugterweise eine Länge l und eine Breite b auf, wobei die Länge l, welche in Längsrichtung der Zeile 21' angeordnet ist, einen Abstand zwischen zwei Zentren Z von benachbart angeordneten Analysatorelementen 25' wiedergibt und insbesondere vorteilhafterweise doppelt so groß ist wie die Breite b der Analysatorelemente 25'.

Beispielsweise weist der Empfänger 20' zwölf Zeilen 21' auf, wobei in jeder Zeile sechs oder sieben Analysatorelemente 25' angeordnet sind. Die Analysatorelemente 25' sind derart angeordnet, dass angrenzende Zeilen 21' jeweils um eine halbe Länge l des Analysatorelementes 25' gegeneinander in Längsrichtung der Zeile 21' versetzt angeordnet sind. Dadurch ergibt sich eine Art Backsteinanordnung. Vor jedem der Analysatorelemente 25' ist ein Polarisationsfilter angeordnet. Die in den Analysatorelementen 25' in Figur 3 angegebene Gradzahl stellt die Verdrehung der Polarisationsebene des vor dem entsprechenden Analysatorelement 25' angeordneten Polarisationsfilters gegenüber einem Winkel von 0° dar.

In jeder der Zeilen 21' ist genau eine Gruppe aus zwei Analysatorelementen 25' angeordnet, wobei sich die beiden Analysatorelemente 25' dadurch unterscheiden, dass ihre Polarisationsebenen um 90° gegeneinander verdreht sind. In jeder der Zeilen 21' sind die beiden Analysatorelemente 25' abwechselnd angeordnet. In einer Zeile 21' benachbarte Analysatorelemente 25' unterscheiden sich somit immer in ihrer Polarisationsrichtung um 90°. Da die mit diesen Analysatorelementen 25' detektierten Signalverläufe genau gegenphasig sind, führt ein Übersprechen lediglich zu einem Einfluss auf die Amplitude, nicht jedoch zu einem Einfluss auf die Phase des Signals. Jede der Zeilen 21' ist somit in sich invariant hinsichtlich der Phase gegenüber Übersprechen.

Aufgrund der Backsteinanordnung tragen jedoch in einer Zeile 21' benachbarte Analysatorelemente 25' jeweils zu gleichen Teilen zum Übersprechen auf ein Analysatorelement 25' in einer benachbarten Zeile 21' bei, sodass sich die Übersprechbeiträge in dem benachbarten Analysatorelement 25' ebenfalls kompensieren.

Ferner sind durch die abwechselnde Anordnung die Analysatorelemente 25' mit gleichen Polarisationsebenen in waagerechter Richtung des Arrays immer durch genau ein Analysatorelement 25' mit einer anderen Polarisationsebene voneinander beabstandet.

Betrachtet man beispielsweise ein innenliegendes Analysatorelement 26, dessen Polarisationsebene im Winkel von 0° angeordnet ist, welches sich im vorliegenden Beispiel insbesondere in der achten Zeile an dritter Stelle von links befindet, erfährt dieses Analysatorelement 26 beispielsweise Übersprechbeiträge von den beiden in der darüber liegenden Zeile 21' angeordneten Analysatorelementen 25' mit den Phasenlagen der Polarisationsfilter von 135° und 45°, welche jedoch um 90° zueinander gedreht sind, somit genau gegenphasig sind und sich daher in dem Analysatorelement 26 kompensieren. Weiterhin erfährt das Analysatorelement 26 Übersprechbeiträge von den beiden in der darunter liegenden Zeile 21' angeordneten Analysatorelementen 25' mit den Winkellagen der Polarisationsfilter von 168,75° und 78,75°, welche ebenfalls genau um 90° zueinander gedreht sind, so dass deren Signalbeiträge ebenfalls gegenphasig sind und sich daher in dem Analysatorelement 26 kompensieren.

Es ist möglich, in jeder der Zeilen 21' gleiche Typen von Analysatorelementen 25' vorzusehen. In dem in Figur 3 dargestellten Ausführungsbeispiel, das nicht Teil der Erfindung ist, werden jedoch acht verschiedene Gruppen A bis H von Analysatorelementen 25' verwendet, nämlich die Gruppen 0° und 90°, 45° und 135°, 22,5° und 112,5°, 157,5° und 67,5°, 11,25° und 101,25°, 146,25° und 56,25°, 123,75° und 33,75° sowie 78,75° und 168,75°. Diese Gruppen können in beliebiger Reihenfolge in beliebig vielen Zeilen angeordnet werden.

Bei einer Auswertung der in dem Empfänger 20' detektierten Signale können sämtliche Analysatorelemente 25' berücksichtigt werden. Vorteilhafterweise werden lediglich die innenliegenden Analysatorelemente 26, welche vollständig von Analysatorelementen 25' umgeben sind, ausgewertet, die außenliegenden Analysatorelemente 27 bei der Auswertung jedoch unberücksichtigt belassen, da in diesen gegebenenfalls die Übersprechbeiträge nicht optimal kompensiert sind.

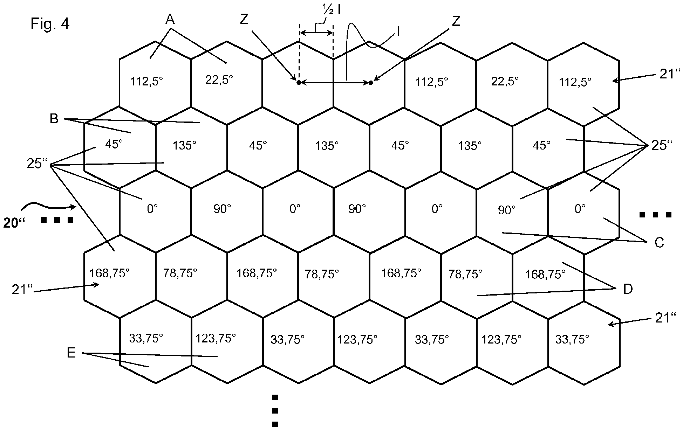

Figur 4 zeigt ein weiteres Ausführungsbeispiel eines Empfängers 20" mit einer Anordnung, die nicht Teil der Erfindung ist, der Analysatorelemente 25". Der Empfänger 20" weist mehrere Analysatorelemente 25" auf, welche in mehreren Zeilen 21" angeordnet sind. Die in Figur 4 in den Analysatorelementen 25" angegebenen Winkelangaben entsprechen wiederum der Drehung der Polarisationsebene des entsprechenden Analysatorelementes 25" gegenüber der Ausrichtung von 0°.

Die in Figur 4 dargestellte Anordnung unterscheidet sich von der in Figur 3 dargestellten Anordnung im Wesentlichen dadurch, dass die Analysatorelemente 25" nicht rechteckig, sondern als Sechseck ausgebildet sind. Die an den Seiten der Anordnung angedeuteten Punkte bedeuten, dass die Anordnung in alle vier Richtungen beliebig mit weiteren Zeilen 21" und weiteren Analysatorelementen 25" fortgesetzt werden kann. Die sechseckige Geometrie kann dabei sowohl regelmäßige Sechsecke als auch unregelmäßige Sechsecke umfassen.

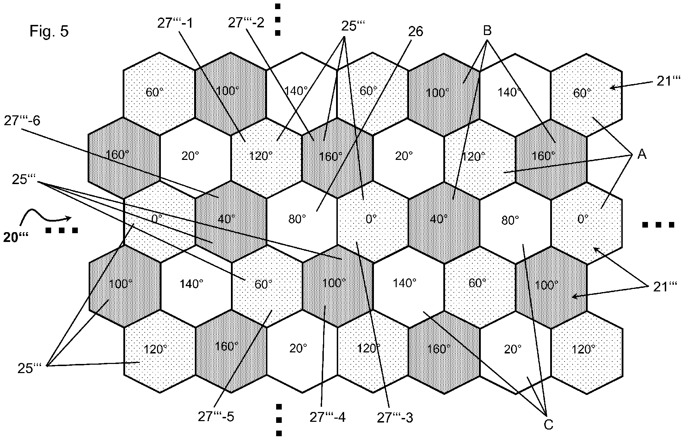

In der Figur 5 ist eine schematische Darstellung eines weiteren Ausführungsbeispiels eines Empfängers 20'" mit einer Anordnung, die nicht Teil der Erfindung ist, der Analysatorelemente 25'" gezeigt. Der Empfänger 20'" weist mehrere Analysatorelemente 25'" auf, welche in Zeilen 21'" angeordnet sind. Die in jedem der Analysatorelemente 25'" angegebene Winkelangabe bezieht sich wiederum auf die Verdrehung der Polarisationsebene des entsprechenden Polarisationsfilters gegenüber der Richtung von 0°. Bei dieser Anordnung der Analysatorelemente 25'" sind die vom Rand des Empfängers 20'" beabstandeten Analysatorelemente 25'" von sechs Analysatorelementen 25'" umgeben, deren Polarisationsrichtungen wie folgt angeordnet sind.

Beispielsweise wird dazu das Analysatorelement 26 in der dritten Zeile 21'" an der dritten Position von links betrachtet, welches beispielsweise eine Richtung der Polarisationsebene von 80° aufweist. Das Analysatorelement 26 ist von sechs Analysatorelementen 27"'-i umgeben. Die Analysatorelemente 27"'-i bilden zwei Gruppen A, B, nämlich eine Gruppe A mit den Analysatorelementen 27"'-1, 27"'-3 und 27"'-5 sowie eine zweite Gruppe B mit den Analysatorelementen 27"'-2, 27"'-4 und 27"'-6. In jeder der beiden Gruppen A, B sind die Polarisationsebenen von zwei Paaren der drei Analysatorelemente 27"'-3 und 27"'-5, 27"'-5 und 27"'-1; 27"'-2 und 27"'-4, 27"'-4 und 27"'-6 um 60° und einem Paar der drei Analysatorelemente 27"'-1 und 27"'-3; 27"'-2 und 27"'-6 um 120° verdreht. Die Polarisationsrichtungen der Empfangselemente 27"'-i können in beiden Gruppen A, B gleich ausgebildet sein. Vorliegend sind jedoch in der ersten Gruppe A die Polarisationsebenen 0°, 60° und 120° angeordnet, während in der zweiten Gruppe B die Polarisationsrichtungen 40°, 100° und 160° angeordnet sind. Hierbei bildet das innenliegende Analysatorelement 26 mit zwei weiteren Analysatorelementen 25'" eine dritte Gruppe C, die die Polarisationsrichtungen 20°, 80° und 140° aufweisen. Die drei Gruppen A, B, C bilden zusammen den Empfänger 20"'.

Umlaufend um das innenliegende Analysatorelement 26 sind abwechselnd Analysatorelemente 27"'-1, 27"'-2, 27"'-3, 27"'-4, 27"'-5, 27"'-6 aus den unterschiedlichen Gruppen A,B angeordnet. Der Signalbeitrag jeder Gruppe zu dem innenliegenden Analysatorelement 26 ist aufgrund der gewählten Symmetrie konstant, sodass die Amplitude des Signals des Analysatorelementes 26 nicht durch das Übersprechen beeinflusst wird. Auch bei dieser Anordnung werden vorteilhafterweise lediglich die vom Rand des Empfängers 20'" beabstandeten Analysatorelemente 25'" ausgewertet, während die außenliegenden Empfangselemente 25"' zwar zum Übersprechen beitragen, in ihnen jedoch das Übersprechen nicht optimal kompensiert wird und sie daher zur Auswertung vorzugsweise nicht berücksichtigt werden. Die Punkte am Rand der Anordnung deuten wiederum an, dass die Anordnung in beliebiger Richtung mit beliebig vielen weiteren Analysatorelementen 25'" fortgesetzt werden kann.

## Patentansprüche

1. Vorrichtung zur Messung des Drehwinkels zweier relativ zueinander rotierender Objekte, mit einem einem ersten Objekt zugeordneten Sender (10), mit einem einem zweiten Objekt (14) zugeordneten, die Polarisationseigenschaft eines Sendelichts beeinflussenden Polarisator (12), wobei sich der Sender (10) und der Polarisator (12) in Abhängigkeit vom Drehwinkel relativ zueinander drehen, und mit einem dem ersten Objekt zugeordneten Empfänger (20), der die durch den Polarisator (12) modulierte Polarisationseigenschaft des Sendelichts analysiert, um ein drehwinkelabhängiges Signal zu erzeugen,
wobei der Empfänger (20) zumindest ein zweidimensionales, aus Zeilen (21) bestehendes Array aufweist, auf dem Empfangselemente mit jeweils vorgeordneten Polarisationsfilterelementen einer Polarisationsfilterstruktur (22) angeordnet sind, so dass die Empfangselemente mit jeweils vorgeordneten Polarisationsfilterelementen der Polarisationsfilterstruktur jeweilige Analysatorelemente (25, 26) bilden, wobei die Analysatorelemente (25, 26) mit jeweils gegeneinander verdrehten Polarisationsebenen derart angeordnet sind, dass mindestens vier Gruppen (A, B, C, D) von Analysatorelementen (25, 26) mit jeweils definiertem Winkelversatz der Polarisationsebenen zueinander sich ergeben, wobei
die Gruppen von Analysatorelementen (25) jeweils aus einem Paar von Analysatorelementen (25) bestehen, wobei ein definierter Winkelversatz der Polarisationsebenen der Analysatorelemente (25) innerhalb eines Paares einer Gruppe 90° zueinander beträgt, wobei benachbarte Analysatorelemente (25) unterschiedliche Polarisationsebenen aufweisen, und wobei
die Analysatorelemente (25) von je zwei benachbarten Zeilen zusammen acht unterschiedliche Polarisationsebenen aufweisen,
**dadurch gekennzeichnet, dass** in jeder Zeile (21) des Arrays höchstens zwei Gruppen (A, C; B, D) von Analysatorelementen (25) angeordnet sind, wobei die Analysatorelemente (25) dieser höchstens zwei Gruppen (A, C; B, D) vier unterschiedliche Polarisationsebenen aufweisen.

2. Vorrichtung nach Anspruch 1, wobei die Gruppen von Analysatorelementen (25) aus Paarungen von 0° und 90°, 22,5° und 112,5°, 45° und 135°, und 67,5° und 157,5° bestehen.

3. Vorrichtung nach Anspruch 1 oder 2, wobei das Array des Empfängers (20) als integrierter Sensor ausgebildet ist, bei welchem insbesondere ein optoelektronischer Sensor und die Polarisationsfilterstruktur (22) gemeinsam auf einem Halbleitersubstrat angeordnet sind.

## Claims

1. An apparatus for measuring the angle of rotation of two objects rotating relative to one another, having a transmitter (10) associated with a first object; having a polarizer (12) associated with a second object (14) and influencing the polarization property of a transmitted light, with the transmitter (10) and the polarizer (12) rotating relative to one another in dependence on the angle of rotation; and having a receiver (20) which is associated with the first object and which analyzes the polarization property of the transmitted light modulated by the polarizer (12) to generate a signal dependent on the angle of rotation, wherein the receiver (20) has at least one two-dimensional array which comprises rows (21) and on which reception elements having respective polarization filter elements of a polarization filter structure (22) arranged before them such that the reception elements having respective polarization filter elements of the polarization filter structure arranged before them form respective analyzer elements (25, 26), with the respective analyzer elements (25, 26) being arranged with polarization planes respectively rotated with respect to one another such that at least four groups (A, B, C, D) of analyzer elements (25, 26) result with a respective defined angular offset of the polarization planes relative to one another; wherein
the groups of analyzer elements (25) each comprise a pair of analyzer elements (25), with a defined angular offset of the polarization planes of the analyzer elements (25) within a pair of a group amounting to 90° with respect to one another;
wherein adjacent analyzer elements (25) have different polarization planes; and wherein
the analyzer elements (25) of each two adjacent rows have eight different polarization planes,
**characterized in that** at most two groups (A, C; B, D) of analyzer elements (25) are arranged in each row (21) of the array, with the analyzer elements (25) of these at most two groups (A, C; B, D) having four different polarization planes.

2. An apparatus in accordance with claim 1, wherein the groups of analyzer elements (25) comprise pairings of 0° and 90°; 22.5° and 112.5°; 45° and 135°; and 67.5° and 157.5°.

3. An apparatus in accordance with claim 1 or claim 2, wherein the array of the receiver (20) is configured as an integrated sensor in which an optoelectronic sensor and the polarization filter structure (22) are in particular arranged together on a semiconductor substrate.

## Revendications

1. Dispositif pour mesurer l'angle de rotation de deux objets en rotation l'un par rapport à l'autre, comprenant un émetteur (10) associé à un premier objet, comprenant un polariseur (12) associé à un second objet (14) et influençant la propriété de polarisation d'une lumière émise, dans lequel l'émetteur (10) et le polariseur (12) tournent l'un par rapport à l'autre en dépendance de l'angle de rotation, et comprenant un récepteur (20) associé au premier objet, qui analyse la propriété de polarisation de la lumière émise modulée par le polariseur (12), afin d'engendrer un signal dépendant de l'angle de rotation,
dans lequel le récepteur (20) comprend au moins un réseau bidimensionnel constitué par des lignes (21), sur lequel sont agencés des éléments de réception précédés par des éléments formant filtre de polarisation respectifs, d'une structure formant filtre de polarisation (22), de sorte que les éléments de réception forment avec des éléments formant filtre de polarisation précédents respectifs de la structure formant filtre de polarisation des éléments analyseurs respectifs (25, 26), dans lequel les éléments analyseurs (25, 26) sont agencés avec des plans de polarisation tournés les uns par rapport aux autres de telle façon qu'il en résulte au moins quatre groupes (A, B, C, D) d'éléments analyseurs (25, 26) avec un des plans de polarisation présentant un décalage angulaire respectif défini, dans lequel
les groupes d'éléments analyseurs (25) sont respectivement constitués d'une paire d'éléments analyseurs (25), de sorte qu'un décalage angulaire défini des plans de polarisation des éléments analyseurs (25) à l'intérieur d'une paire d'un groupe s'élève à 90°, dans lequel des éléments analyseurs (25) voisins présentent des plans de polarisation différents, et dans lequel
les éléments analyseurs (25) de deux lignes adjacentes le long présentent huit plans de polarisation différents,
**caractérisé en ce que** deux groupes (A, C ; B, D) d'éléments analyseurs (25) au maximum sont agencés dans chaque ligne (21), et les éléments analyseurs (25) de ces deux groupes au maximum (A, C ; B, D) présentent quatre plans de polarisation différents.

2. Dispositif selon la revendication 1, dans lequel les groupes d'éléments analyseurs (25) sont constitués par des paires à 0° et 90°, 22,5° et 112,5°, 45° et 135°, et 67,5° et 157,5°.

3. Dispositif selon la revendication 1 ou 2, dans lequel le réseau du récepteur (20) est réalisé sous forme de capteur intégré, dans lequel en particulier un capteur optoélectronique et la structure formant filtre de polarisation (22) sont agencés ensemble sur un substrat semi-conducteur.
